(19) Europäisches Patentamt / European Patent Office / Office européen des brevets

(11) **EP 3 971 014 B1**

(12) **EUROPEAN PATENT SPECIFICATION**

(45) Date of publication and mention of the grant of the patent:
**12.02.2025 Bulletin 2025/07**

(21) Application number: **19937172.5**

(22) Date of filing: **21.10.2019**

(51) International Patent Classification (IPC):
**B60L 7/22** (2006.01)     **B60L 7/10** (2006.01)
**B60W 10/26** (2006.01)     **B60W 10/30** (2006.01)
**B60W 30/18** (2012.01)

(52) Cooperative Patent Classification (CPC):
**B60T 8/1705; B60L 1/003; B60L 1/02; B60L 7/10;
B60L 7/22; B60W 10/26; B60W 10/30;
B60W 30/18127;** B60L 2200/26; B60L 2240/80;
B60T 2270/604; B60W 2510/242; B60W 2510/305

(86) International application number:
**PCT/CN2019/112184**

(87) International publication number:
**WO 2021/003881 (14.01.2021 Gazette 2021/02)**

(54) **METHOD AND APPARATUS FOR DISTRIBUTING ELECTRIC BRAKING POWER OF HYBRID ELECTRIC TRAM, AND STORAGE MEDIUM**

VERFAHREN UND VORRICHTUNG ZUR VERTEILUNG ELEKTRISCHER BREMSLEISTUNG EINER HYBRIDELEKTROSTRASSENBAHN UND SPEICHERMEDIUM

PROCÉDÉ ET APPAREIL POUR DISTRIBUER UNE PUISSANCE DE FREINAGE ÉLECTRIQUE D'UN TRAMWAY ÉLECTRIQUE HYBRIDE, ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.07.2019 CN 201910604442**

(43) Date of publication of application:
**23.03.2022 Bulletin 2022/12**

(73) Proprietor: **Zhuzhou CRRC Times Electric Co., Ltd.
Zhuzhou, Hunan 412001 (CN)**

(72) Inventors:
• **ZHANG, Lujun
Zhuzhou, Hunan 412001 (CN)**
• **YUAN, Wenye
Zhuzhou, Hunan 412001 (CN)**
• **CHEN, Xinjian
Zhuzhou, Hunan 412001 (CN)**
• **LIU, Yong
Zhuzhou, Hunan 412001 (CN)**
• **LIU, Xiang
Zhuzhou, Hunan 412001 (CN)**
• **HU, Lingjun
Zhuzhou, Hunan 412001 (CN)**
• **QIAO, Xianhua
Zhuzhou, Hunan 412001 (CN)**

(74) Representative: **Thoma, Michael
Lorenz Seidler Gossel
Rechtsanwälte Patentanwälte
Partnerschaft mbB
Widenmayerstraße 23
80538 München (DE)**

(56) References cited:
EP-A1- 2 394 837          EP-A1- 3 188 357
WO-A1-2019/100945         WO-A2-2014/118678
CN-A- 106 443 241         CN-A- 108 790 840
CN-A- 108 859 775         CN-A- 109 204 012
DE-A1- 102006 056 374     DE-A1- 102015 220 316
JP-A- 2012 205 318

## Description

The present application claims priority to Chinese Patent Application No. 201910604442.X, titled "METHOD AND APPARATUS FOR DISTRIBUTING ELECTRIC BRAKING POWER OF HYBRID ELECTRIC TRAM, AND MEDIUM", filed on July 5, 2019 with the China National Intellectual Property Administration.

## FIELD

The present invention relates to the technical field of rail transit, and in particular to a method and a device for distributing electric braking power of a hybrid electric tram, and a computer readable storage medium.

## BACKGROUND

A tram is a light rail transit vehicle driven by electricity and running on rails. The new urban rail transit system represented by trams usually powered by contactless power supply in order to not affect the urban landscape. The contactless power supply has various types, including an on-board power storage device, a hydrogen fuel cell, ground contactless power supply, an internal combustion engine system, and the like.

Due to limitations of an installation space in the vehicle, an axle load of the vehicle, project costs, power rating, power density and the like, the contactless power supply cannot fully meet the power demand of the whole vehicle. Therefore, in the conventional technology, the tram is usually powered by hybrid power supply. That is, the tram is powered by both a power storage system that is capable of charging and being charged and a unidirectional power supply such as the hydrogen fuel cell, the contactless induction power supply, or the internal combustion engine.

During electric braking of the tram, kinetic energy or potential energy of a traction motor is converted into braking power. Since the unidirectional power supply including the hydrogen fuel cell, the contactless induction power supply or the internal combustion engine cannot absorb the braking power, only the power storage system absorbs the braking power during electric braking of the tram. However, a charging current of the on-board power storage system is small, so that the braking power cannot be fully absorbed. The braking power that exceeds power allowed to flow through the on-board power storage system may damage the power storage system. Alternatively, all the braking power is consumed by a braking resistor, resulting in waste of the braking power. An example thereof is given in document DE 10 2006 056374 A1.

It can be seen that, how to properly distribute the electric braking power of the hybrid electric tram so as to improve utilization of the braking power is a problem to be solved urgently by those skilled in the art.

## SUMMARY

A method and a device for distributing electric braking power of a hybrid electric tram, and a computer readable storage medium are provided according to embodiments of the present invention, to properly distribute the electric braking power of the hybrid electric tram, thereby improving utilization of the braking power.

In order to solve the above technical problem, a method for distributing electric braking power of a hybrid electric tram is provided according to an embodiment of the present invention. The method includes: acquiring a braking voltage and a braking current of a traction inverter system when a traction motor brakes; acquiring consumption power of a power consumption system, output power of a unidirectional power supply system and maximum charging power of a power storage system; calculating, based on the consumption power, the output power, the maximum charging power, the number of traction inverters and the braking voltage, a maximum current limit fed back to a bus by a single traction inverter; and controlling a braking resistor system to be switched on or off based on the braking current and the maximum current limit.

In an embodiment, the consumption power includes power $P_{auxiliary}$ of an auxiliary system and power $P_{air\ conditioner}$ of a direct current air conditioning system. Accordingly, the calculating, based on the consumption power, the output power, the maximum charging power, the number of traction inverters and the braking voltage a maximum current limit fed back to a bus by a single traction inverter includes: calculating maximum power $P_{feedback}$ fed back to a direct current bus from an equation $P_{feedback}=P_{power\ storage\ charging}+P_{auxiliary}+P_{air\ conditioner}-P_{dc}$, where $P_{dc}$ represents the output power of the unidirectional power supply system, and $P_{power\ storage\ charging}$ represents the maximum charging power of the power storage system; and calculating the maximum current limit $I_{feedback}$ fed back to the direct current bus by the single traction inverter from an equation: $I_{feedback}=P_{feedback}/(N \times U_{VH2})$, where $N$ represents the number of traction inverters and $U_{VH2}$ represents the braking voltage of the traction inverter system.

In an embodiment, the controlling the braking resistor system to be switched on or off based on the braking current and the maximum current limit includes: controlling a circuit where the braking resistor system is arranged to be switched on when a braking current $I_{LH1}$ is greater than a result of $k_1 \times I_{feedback}$; and controlling the circuit where the braking resistor system is arranged to be switched off when the braking current $I_{LH1}$ is less than a result of $k_2 \times I_{feedback}$, where $k_1$ and $k_2$ each represent a control parameter.

In an embodiment, after the controlling a circuit where the braking resistor system is arranged to be switched on, the method further includes: recording a cumulative time period during which the circuit where the braking resistor system is arranged is closed; determining whether the cumulative time period exceeds a predetermined time threshold; and stopping electric braking when it is determined that the cumulative time period exceeds the predetermined time threshold.

In an embodiment, after the stopping electric braking, the method further includes: displaying prompt information indicating that the electric braking is unavailable.

A device for distributing electric braking power of a hybrid electric tram is further provided according to an embodiment of the present invention. The device includes a collection unit, an acquisition unit, a calculation unit and a control unit. The collection unit is configured to acquire a braking voltage and a braking current of a traction inverter system when a traction motor brakes. The acquisition unit is configured to acquire consumption power of a power consumption system, output power of a unidirectional power supply system and maximum charging power of a power storage system. The calculation unit is configured to calculate, based on the consumption power, the output power, the maximum charging power, the number of traction inverters and the braking voltage, a maximum current limit fed back to a bus by a single traction inverter. The control unit is configured to control a braking resistor system to be switched on or off based on the braking current and the maximum current limit.

In an embodiment, the consumption power includes power $P_{auxiliary}$ of an auxiliary system and power $P_{air\ conditioner}$ of a direct current air conditioning system. Accordingly, the calculation unit includes a power calculation subunit and a current calculation subunit. The power calculation subunit is configured to calculate maximum power $P_{feedback}$ fed back to a direct current bus from an equation $P_{feedback}=P_{power\ storage\ charging}+P_{auxiliary}+P_{air\ conditioner}-P_{dc}$, where $P_{dc}$ represents the output power of the unidirectional power supply system, and $P_{power\ storage\ charging}$ represents maximum charging power of the power storage system. The current calculation subunit is configured to calculate the maximum current limit $I_{feedback}$ fed back to the bus by the single traction inverter from an equation: $If_{eedback}=Pf_{eedback}/(N\times U_{VH2})$, where $N$ represents the number of traction inverters and $U_{VH2}$ represents the braking voltage of the traction inverter system.

In an embodiment, the control unit includes a switch-on subunit and a switch-off subunit. The switch-on subunit is configured to control a circuit where the braking resistor system is arranged to be switched on when a braking current $I_{LH1}$ is greater than a result of $k_1\times I_{feedback}$. The switch-off subunit is configured to control the circuit where the braking resistor system is arranged to be switched off when the braking current $I_{LH1}$ is less than a result of $k_2\times I_{feedback}$. $k_1$ and $k_2$ each represent a control parameter.

In an embodiment, the device further includes a recording unit, a time determination unit and a stop unit. The recording unit is configured to record, when the circuit where the braking resistor system is arranged is controlled to be switched on, a cumulative time period during which the circuit where the braking resistor system is arranged is closed. The time determination unit is configured to determine whether the cumulative time period exceeds a predetermined time threshold, and trigger the stop unit when the cumulative time period exceeds the predetermined time threshold. The stop unit is configured to stop the electric braking.

In an embodiment, the device further includes a display unit. The display unit is configured to display, when the electric braking is stopped, prompt information indicating that the electric braking is unavailable.

A device for distributing electric braking power of a hybrid electric tram is further described. The device includes a memory and a processor. The memory is configured to store a computer program. The processor is configured to execute the computer program to perform the above method for distributing electric braking power of a hybrid electric tram.

A computer readable storage medium is further provided according to an embodiment of the present invention. The computer readable storage medium stores a computer program that, when being executed by a processor, performs the above method for distributing electric braking power of a hybrid electric tram.

It can be seen from the above technical solutions that when the traction motor brakes, the braking voltage and the braking current of the traction inverter system are acquired. The consumption power of the power consumption system, the output power of the unidirectional power supply system and the maximum charging power of the power storage system are acquired. The systems in the tram are connected in parallel. The braking voltage reflects the voltage on the direct current bus. Therefore, the maximum current limit fed back to the direct current bus by a single traction inverter is calculated based on the consumption power, the output power, the maximum charging power, the number of traction inverters and the braking voltage. Based on the braking current and the maximum current limit, the braking resistor system is dynamically controlled to be switched on or off. When the braking power exceeds the power allowed to flow through the power storage system, the amount of power that the braking power exceeds the power allowed to flow through the power storage system is consumed by the braking resistor system, to prevent overcurrent of the power storage system. When the braking power is less than the power allowed to flow through the power storage system, the braking power fully is fed back to the power storage system. Therefore, the braking power is distributed properly, thereby improving the utilization of the braking power, and effectively increasing a mileage of the tram.

**BRIEF DESCRIPTION OF THE DRAWINGS**

In order to more clearly describe the embodiments of the present invention, drawings to be used in the embodiments of the present invention are briefly described hereinafter. It is apparent that the drawings described below show merely some embodiments of the present invention, and those skilled in the art may obtain other drawings according to the provided drawings without any creative effort.

Figure 1 is a schematic block diagram showing a system main circuit of a hybrid electric tram according to the conventional technology;

Figure 2 is a flowchart of a method for distributing electric braking power of a hybrid electric tram according to an embodiment of the present invention;

Figure 3 is a schematic diagram showing distribution and adjustment of braking power according to an embodiment of the present invention;

Figure 4 is a schematic structural diagram of a device for distributing electric braking power of a hybrid electric tram according to an embodiment of the present invention; and

Figure 5 is a schematic diagram showing a hardware structure of a device for distributing electric braking power of a hybrid electric tram according to an example not falling within the scope of the invention.

## DETAILED DESCRIPTION OF EMBODIMENTS

Technical solutions of embodiments of the present invention are clearly and completely described below in conjunction with the drawings of the embodiments of the present invention. Apparently, the embodiments described below are only some rather than all the embodiments of the present invention. Any other embodiments obtained by those skilled in the art based on the embodiments in the present invention without any creative effort fall within the protection scope of the present invention.

In order to understand the solutions of the present invention by those skilled in the art, the present invention is described in detail below in conjunction with the drawings and the embodiments.

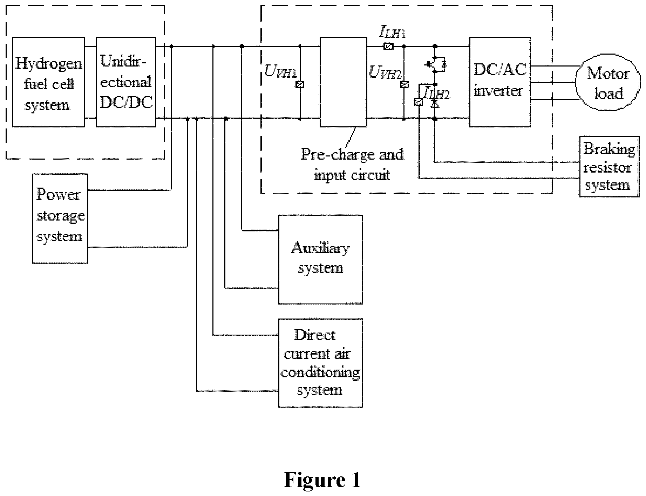

In the conventional technology, the tram is usually powered by a hybrid power supply. Figure 1 is a block diagram showing a system main circuit of a hybrid electric tram commonly used according to the conventional technology. A power supply system in Figure 1 includes a power storage system and a unidirectional power supply system. The unidirectional power supply system includes a hydrogen fuel cell system and a unidirectional DC/DC. The tram includes a direct current air conditioning system connected to a high-voltage direct current bus, and an auxiliary system formed by an auxiliary converter or a charger and a load connected to the charger. A second dashed block from the left in Figure 1 represents a traction inverter system. The traction inverter system includes an input voltage sensor, a pre-charge and input circuit, a direct current sensor, an intermediate voltage sensor, a chopper control module, a DC/AC inverter module, and the like. The DC/AC inverter module includes multiple outputs to drive multiple motor loads. A braking resistor system includes multiple braking resistors connected in series and parallel.

A running tram is powered by both the power storage system and the unidirectional power supply system such as a hydrogen fuel cell, a contactless induction power supply, or an internal combustion engine power generation system. When the tram electrically brakes, braking power is generated. Due to the unidirectionality of the power supply system such as the hydrogen fuel cell or the contactless induction power supply, only the power storage system receives the braking power. However, a charging current of the power storage system is small, so that the braking power cannot be fully absorbed by the power storage system. All the braking power being transmitted to the power storage system may result in overcurrent in the power storage system and even cause the power storage system to burn. Therefore, a method and a device for distributing electric braking power of a hybrid electric tram, and a computer readable storage medium are provided according to the embodiments of the present invention. Based on power and braking voltages of systems in the tram, a maximum current limit fed back by a single traction inverter to the bus is calculated. Based on the braking current and the maximum current limit, the braking resistor system is dynamically controlled to be switched on or off. The overcurrent of the power storage system is prevented and the braking power is fed back to the power storage system as much as possible, so that the braking power is distributed properly, thereby improving the utilization of the braking power. The braking power is fed back to the power storage system as much as possible, so that a mileage of the tram is effectively increased.

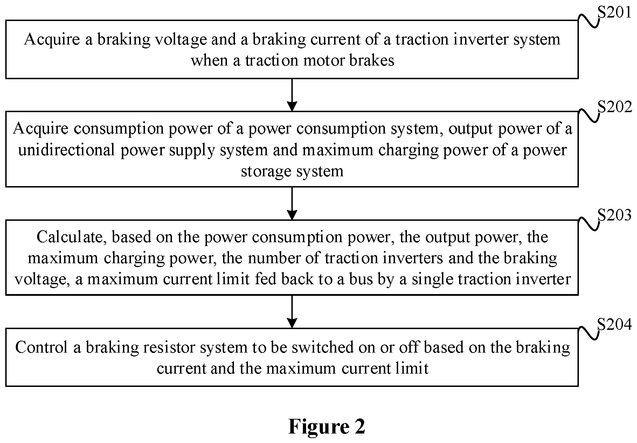

Next, the method for distributing electric braking power of a hybrid electric tram according to an embodiment of the present invention is described in detail. Figure 2 is a flowchart of the method for distributing electric braking power of a hybrid electric tram according to an embodiment of the present invention. The method includes the following steps S201 to S204.

In step S201, when a traction motor brakes, a braking voltage and a braking current of a traction inverter system are acquired.

In the embodiment of the present invention, the braking voltage and the braking current of the traction inverter system are acquired by a voltage sensor and a current sensor arranged on the traction inverter system, respectively.

The braking power converted during the electric braking of the tram is a variable. In practice, the braking voltage and the braking current of the traction inverter system are acquired in real time or periodically at short intervals. In conjunction with the principle shown in Figure 1, there are two voltages which are represented by $U_{VH1}$ and $U_{VH2}$ and two currents which are represented by $I_{LH1}$ and $I_{LH2}$. In the embodiment of the preset invention, the acquired current $I_{LH1}$ serves as the braking current and the acquired voltage $U_{VH2}$ serves as the braking voltage.

In step S202, consumption power of a power consumption system, output power of a unidirectional power supply system and maximum charging power of a power storage system are acquired.

A power of a system reflects instantaneous energy of the system. In the embodiment of the present invention, maximum electric braking power fed back to a direct current bus is determined based on present power of systems in the tram.

In conjunction with the principle shown in Figure 1, the consumption power may include power $P_{auxiliary}$ of an auxiliary system and power $P_{air\ conditioner}$ of a direct current air conditioning system.

The tram is provided with a network control system configured to manage the power consumption system, the unidirectional power supply system, and the power storage system. The auxiliary system transfers real-time power $P_{auxiliary}$ of the auxiliary converter or the charger to the network control system. A direct current air conditioning control system transfers real-time power $P_{air\ conditioner}$ of the direct current air conditioning system to the network control system. The power supply system transfers maximum charging power $P_{power\ storage\ charging}$ of the power storage system and the output power $P_{dc}$ of the unidirectional power supply system to the network control system.

In step S203, a maximum current limit fed back to the bus by a single traction inverter is calculated based on the consumption power, the output power, the maximum charging power, the number of traction inverters and the braking voltage.

When the tram performs electric braking, output power of some unidirectional power supply system cannot be directly reduced to zero. Therefore, in the embodiment of the present invention, the output power of the unidirectional power supply system is considered in calculating the maximum power fed back to the direct current bus.

The maximum power $P_{feedback}$ fed back to the direct current bus is calculated from an equation $P_{feedback}=P_{power\ storage\ charging}+P_{auxiliary}+P_{air\ conditioner}-P_{dc}$, where $P_{dc}$ represents the output power of the unidirectional power supply system.

Systems in the tram are connected in parallel, and the braking voltage reflects the voltage on the direct current bus. After the maximum power fed back to the direct current bus is calculated, a maximum current limit $I_{feedback}$ fed back to the bus by a single traction inverter is calculated from the following equation, and the maximum current limit represents a maximum current that is allowed to be fed back to the bus by a single traction inverter.

$$I_{feedback}=P_{feedback}/(N\times U_{VH2}),$$

where $N$ represents the number of traction inverters, and $U_{VH2}$ represents the braking voltage of the traction inverter system.

In step S204, the braking resistor system is dynamically controlled to be switched on or off based on the braking current and the maximum current limit.

During the electric braking of the tram, the braking current and the maximum current limit fed back to the direct current bus by a single traction inverter each are a variable. For example, the braking voltage and the braking current of the traction inverter system are acquired in real time. In the embodiment of the present invention, a central processor of the tram detects the braking current in real time and calculates, in real time, the maximum current limit fed back to the direct current bus by a single traction inverter.

When the braking current $I_{LH1}$ is greater than a result of $k_2 \times I_{feedback}$ the braking power exceeds the power allowed to flow through the power storage system. In this case, a circuit where the braking resistor system is arranged is controlled to be switched on, so that the braking resistor absorbs the braking power partly, to effectively avoid overcurrent of the power storage system.

When the braking current $I_{LH1}$ is less than a result of $k_1 \times I_{feedback}$, the braking power is less than the power allowed to flow through the power storage system. In this case, the circuit where the braking resistor system is arranged is controlled to be switched off, so that the braking power is fully fed back to the power storage system.

$I_{LH1}$ represents the braking current. $k_1$ and $k_2$ each represent a control parameter. The coefficient $k_1$ is equal to or different from the coefficient $k_2$, depending on experiment conditions, which is not limited herein.

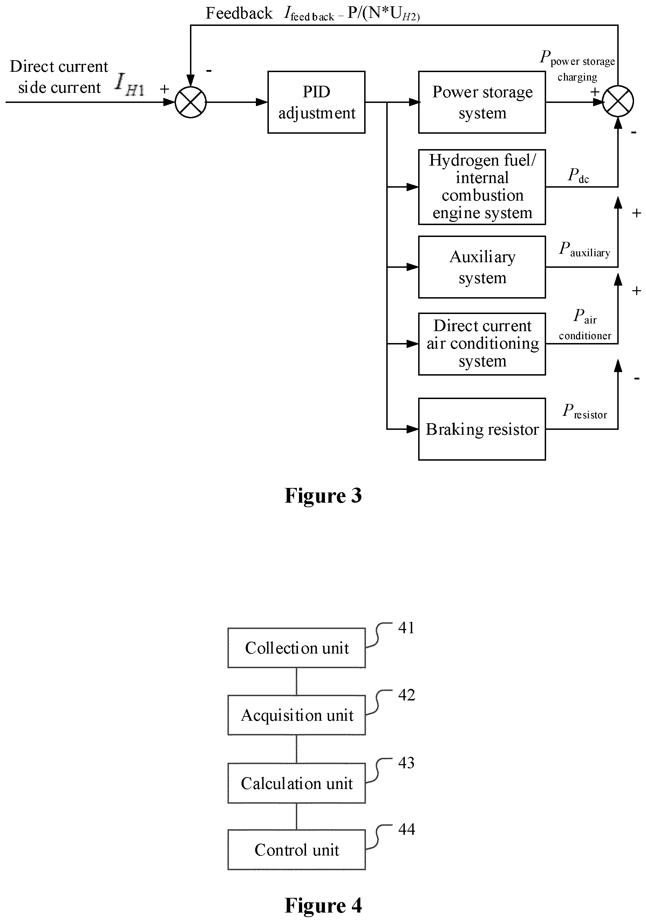

Figure 3 is a schematic diagram showing controlling for distribution and adjustment of the electric braking power corresponding to the method for distributing electric braking power of a hybrid electric tram according to an embodiment of the present invention. Each of the power storage system, the auxiliary system and the direct current air conditioning system absorbs the braking power. Therefore, the power $P_{power\ storage\ charging}$, the power $P_{auxiliary}$ and the power $P_{air\ conditioner}$ are all positive. The unidirectional power supply system such as the hydrogen fuel cell and the internal combustion engine system still generate power in a short time period during electric braking of the tram. Therefore, the power $P_{dc}$ is negative. The braking resistor consumes braking power. Therefore, the power $P_{resistor}$ is negative.

It can be seen from the above technical solutions that when the traction motor brakes, the braking voltage and the braking current of the traction inverter system are acquired. The consumption power of the power consumption system, the output power of the unidirectional power supply system and the maximum charging power of the power storage system are acquired. The systems in the tram are connected in parallel.

The braking voltage reflects the voltage on the direct current bus. Therefore, the maximum current limit fed back to the direct current bus by a single traction inverter is calculated based on the consumption power, the output power, the maximum charging power, the number of traction inverters and the braking voltage. Based on the braking current and the maximum current limit fed back to the direct current bus by a single traction inverter, the braking resistor system is dynamically controlled to be switched on or off. When the braking power exceeds the power allowed to flow through the power storage system, the amount of power that the braking power exceeds the power allowed to flow through the power storage system is consumed by the braking resistor system, so as to prevent overcurrent of the power storage system. When the braking power is less than the power allowed to flow through the power storage system, the braking power is fully fed back to the power storage system. Therefore, the braking power is distributed properly, thereby improving utilization of the braking power, and effectively increasing a mileage of the tram.

In the embodiment of the present invention, in order to effectively protect the braking resistor system, cumulative operation duration of the braking resistor system is limited. For example, a predetermined time threshold is set. The predetermined time threshold represents cumulative duration during which the braking resistor system operates, and depends on the braking resistor, which is not limited herein.

In practice, a cumulative time period during which a circuit where the braking resistor system is arranged is closed is recorded. It is determined whether the cumulative time period exceeds the predetermined time threshold.

The braking resistor system, when operating for the cumulative time period exceeding the predetermined time threshold, is prone to burning. In this case, the electric braking is stopped.

The braking of the system includes electric braking and mechanical braking. When the electric braking is stopped, prompt information indicating that the electric braking is unavailable is displayed, so that relevant braking measures are taken in time according to actual needs.

Figure 4 is a schematic structural diagram of a device for distributing electric braking power of a hybrid electric tram according to an embodiment of the present invention. The device includes a collection unit 41, an acquisition unit 42, a calculation unit 43 and a control unit 44.

The collection unit 41 is configured to acquire a braking voltage and a braking current of a traction inverter system when a traction motor brakes.

The acquisition unit 42 is configured to acquire consumption power of a power consumption system, output power of a unidirectional power supply system and maximum charging power of a power storage system.

The calculation unit 43 is configured to calculate, based on the consumption power, the output power, the maximum charging power, the number of traction inverters and the braking voltage, a maximum current limit fed back to a direct current bus by a single traction inverter.

The control unit 44 is configured to dynamically control the braking resistor system to be switched on or off based on the braking current and the maximum current limit.

In an embodiment, the consumption power includes power $P_{auxiliary}$ of an auxiliary system and power $P_{air\ conditioner}$ of a direct current air conditioning system.

Accordingly, the calculation unit includes a power calculation subunit and a current calculation subunit.

The power calculation subunit is configured to calculate maximum power $P_{feedback}$ fed back to the direct current bus from an equation $P_{feedback}=P_{power\ storage\ charging}+P_{auxiliary}+P_{air\ conditioner}-P_{dc}$, where $P_{dc}$ represents the output power of the unidirectional power supply system, and $P_{power\ storage\ charging}$ represents maximum charging power of the power storage system.

The current calculation subunit is configured to calculate the maximum current limit $I_{feedback}$ fed back to the direct current bus by a single traction inverter according to the following equation:

$$I_{feedback}=P_{feedback}/(N \times U_{VH2}),$$

where $N$ represents the number of traction inverters and $U_{VH2}$ represents the braking voltage of the traction inverter system.

In an embodiment, the control unit includes a switch-on subunit and a switch-off subunit.

The switch-on subunit is configured to control a circuit where the braking resistor system is arranged to be switched on when the current $I_{LH1}$ is greater than a result of $k_1 \times I_{feedback}$.

The switch-off subunit is configured to control the circuit where the braking resistor system is arranged to be switched off when the current $I_{LH1}$ is less than a result of $k_2 \times I_{feedback}$, where $I_{LH1}$ represents the braking current, and $k_1$ and $k_2$ each represent a control parameter.

In an embodiment, the device further includes a recording unit, a time determination unit and a stop unit.

The recording unit is configured to record, when the circuit where the braking resistor system is arranged is controlled to be switched on, a cumulative time period during which the circuit where the braking resistor system is arranged is closed.

The time determination unit is configured to determine whether the cumulative time period exceeds a predetermined time threshold, and trigger the stop unit when the cumulative time period exceeds the predetermined time threshold.

The stop unit is configured to stop the electric braking.

In an embodiment, the device further includes a display unit.

The display unit is configured to display, when the electric braking is stopped, prompt information indicating that the electric braking is unavailable.

For the description of the features in the embodiment shown in Figure 4, one may refer to relevant description of the embodiment shown Figure 2. Therefore, the features in the embodiment shown in Figure 4 is not described in detail herein.

It can be seen from the above technical solutions that when the traction motor brakes, the braking voltage and the braking current of the traction inverter system are acquired. The consumption power of the power consumption system, the output power of the unidirectional power supply system and the maximum charging power of the power storage system are acquired. The systems in the tram are connected in parallel. The braking voltage reflects the voltage on the direct current bus. Therefore, the maximum current limit fed back to the direct current bus by a single traction inverter is calculated based on the consumption power, the output power, the maximum charging power, the number of traction inverters and the braking voltage. Based on the braking current and the maximum current limit, the braking resistor system is dynamically controlled to be switched on or off. When the braking power exceeds the power allowed to flow through the power storage system, the amount of power that the braking power exceeds the power allowed to flow through the power storage system is consumed by the braking resistor system, so as to prevent overcurrent of the power storage system. When the braking power is less than the power allowed to flow through the power storage system, the braking power is fully fed back to the power storage system. Therefore, the braking power is distributed properly, thereby improving utilization of the braking power, and effectively increasing a mileage of the tram.

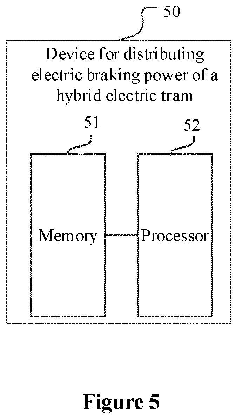

Figure 5 is a schematic diagram showing a hardware structure of a device 50 for distributing electric braking power of a hybrid electric tram. The device includes a memory 51 and a processor 52. The device shown in Figure 5 is given herein as an example merely instead of part of the present invention.

The memory 51 is configured to store a computer program.

The processor 52 is configured to execute the computer program to perform the method for distributing electric braking power of a hybrid electric tram.

A computer readable storage medium is further provided according to an embodiment of the present invention. The computer readable storage medium stores a computer program that, when being executed by a processor, performs the method for distributing electric braking power of a hybrid electric tram.

The method and the device for distributing electric braking power of a hybrid electric tram and the computer readable storage medium according to the embodiments of the present invention are described in detail above. The embodiments in this specification are described in a progressive way, each of which emphasizes the differences from others, and for the same or similar parts among the embodiments, one may refer to description of other embodiments. Since the device disclosed in the embodiments is substantially similar to the method therein, the description of the device is relatively simple, and for relevant matters, one may refer to the description of the method embodiments. It should be noted that for those skilled in the art, various improvements and modifications may be made to the present invention without departing from the principle of the present invention, and the improvements and modifications fall within the protection scope of the claims of the present invention.

It should be further understood by those skilled in the art that units and steps of algorithm described in combination with the disclosed embodiments may be implemented by electronic hardware, computer software or a combination thereof. In order to clearly describe interchangeability of the hardware and the software, the elements and steps in each example are generally described according to functions. Whether the functions are realized by the hardware or the software depends on specific applications of the technical solutions and design constraints. For each of the specific applications, those skilled in the art may implement the functions described above with various methods, which should fall within the scope of the present invention.

The steps of the method or algorithm described in connection with the embodiments disclosed herein may be implemented directly by hardware, a software module executed by a processor, or a combination thereof. The software module may be configured in a random access memory (RAM), a memory, a read only memory (ROM), an electrically programmable ROM, an electrically erasable programmable ROM, a register, a hard disk, a removable disk, a CD-ROM, or any other storage medium known in the art.

**Claims**

1. A method for distributing electric braking power of a hybrid electric tram, comprising:

    acquiring (S201) a braking voltage and a braking current of a traction inverter system when a traction motor brakes;
    acquiring (S202) consumption power of a power consumption system, output power of a unidirectional power supply system and maximum charging power of a power storage system;
    calculating (S203), based on the consumption power, the output power, the maximum charging power, the number of traction inverters and the braking voltage, a maximum current limit fed back to a bus by a single traction inverter; and controlling (S204) a braking resistor system to be switched on or off based on the braking current and the maximum current limit.

2. The method according to claim 1, wherein

the consumption power comprises power $P_{auxiliary}$ of an auxiliary system and power $P_{air conditioner}$ of a direct current air conditioning system, wherein the calculating, based on the consumption power, the output power, the maximum charging power, the number of traction inverters and the braking voltage, a maximum current limit fed back to a bus by a single traction inverter comprises:

calculating maximum power $P_{feedback}$ fed back to a direct current bus from an equation $P_{feedback}=P_{power\ storage\ charging}+P_{auxiliary}+P_{air\ conditioner}-P_{dc}$, wherein $P_{dc}$ represents the output power of the unidirectional power supply system, and $P_{power\ storage\ charging}$ represents the maximum charging power of the power storage system; and calculating the maximum current limit $I_{feedback}$ fed back to the bus by the single traction inverter from an equation: $I_{feedback}=P_{feedback}/(N{\times}U_{VH2})$, wherein $N$ represents the number of traction inverters and $U_{VH2}$ represents the braking voltage of the traction inverter system.

3. The method according to claim 2, wherein the controlling a braking resistor system to be switched on or off based on the braking current and the maximum current limit fed back to the bus by the single traction inverter comprises:

controlling a circuit where the braking resistor system is arranged to be switched on when a braking current $I_{LH1}$ is greater than a result of $k_1{\times}I_{feedback}$; and controlling the circuit where the braking resistor system is arranged to be switched off when the braking current $I_{LH1}$ is less than a result of $k_2{\times}I_{feedback}$, wherein $k_1$ and $k_2$ each represent a control parameter.

4. The method according to claim 3, further comprising: after the controlling a circuit where the braking resistor system is arranged to be switched on,

recording a cumulative time period during which the circuit where the braking resistor system is arranged is closed; determining whether the cumulative time period exceeds a predetermined time threshold; and stopping electric braking when it is determined that the cumulative time period exceeds the predetermined time threshold.

5. The method according to claim 4, further comprising:
after the stopping electric braking,
displaying prompt information indicating that the electric braking is unavailable.

6. A device for distributing electric braking power of a hybrid electric tram, comprising:

a collection unit (41) configured to acquire a braking voltage and a braking current of a traction inverter system when a traction motor brakes; an acquisition unit (42) configured to acquire consumption power of a power consumption system, output power of a unidirectional power supply system and maximum charging power of a power storage system; a calculation unit (43) configured to calculate, based on the consumption power, the output power, the maximum charging power, the number of traction inverters and the braking voltage, a maximum current limit fed back to a bus by a single traction inverter; and a control unit (44) configured to control a braking resistor system to be switched on or off based on the braking current and the maximum current limit.

7. The device according to claim 6, wherein

the consumption power comprises power $P_{auxiliary}$ of an auxiliary system and power $P_{air conditioner}$ of a direct current air conditioning system, wherein the calculation unit comprises:

a power calculation subunit configured to calculate maximum power $P_{feedback}$ fed back to a direct current bus from an equation $P_{feedback}=P_{power\ storage\ charging}+P_{auxiliary}+P_{air\ conditioner}-P_{dc}$, wherein $P_{dc}$ represents the output power of the unidirectional power supply system, and $P_{power\ storage\ charging}$ represents maximum charging power of the power storage system; and a current calculation subunit configured to calculate the maximum current limit $I_{feedback}$ fed back to the bus by the single traction inverter from an equation: $I_{feedback}=P_{feedback}/(N{\times}U_{VH2})$, wherein $N$ represents the number of traction inverters and $U_{VH2}$ represents the braking voltage of the traction inverter system.

**8.** The device according to claim 6, wherein the control unit comprises

a switch-on subunit configured to control a circuit where the braking resistor system is arranged to be switched on when a braking current $I_{LH1}$ is greater than a result of $k_1 \times I_{feedback}$; and a switch-off subunit configured to control the circuit where the braking resistor system is arranged to be switched off when the braking current $I_{LH1}$ is less than a result of $k_2 \times I_{feedback}$, wherein $k_1$ and $k_2$ each represent a control parameter.

**9.** A computer readable storage medium, wherein the computer readable storage medium stores a computer program that, when being executed by a processor, performs the method for distributing electric braking power of a hybrid electric tram according to any one of claims 1 to 5.

**Patentansprüche**

**1.** Verfahren zum Verteilen elektrischer Bremsleistung einer Hybrid-Elektrostraßenbahn, umfassend:

Erfassen (S201) einer Bremsspannung und eines Bremsstroms eines Traktionswechselrichtersystems, wenn ein Triebmotor bremst; Erfassen einer Verbrauchsleistung eines Verbrauchsleistungssystems, einer Leistungsabgabe eines unidirektionalen Energiezufuhrsystems und einer maximalen Ladeleistung eines Energiespeichersystems; Berechnen (S203) einer maximalen Stromgrenze, die von einem einzelnen Traktionswechselrichter an eine Sammelschiene zurückgeführt wird, auf Grundlage der Verbrauchsleistung, der Leistungsabgabe, der maximalen Ladeleistung, der Anzahl von Traktionswechselrichtern und der Bremsspannung; und Steuern eines Bremswiderstandssystems, das auf Grundlage des Bremsstroms und der maximalen Stromgrenze ein- oder ausgeschaltet werden soll.

**2.** Verfahren nach Anspruch 1, wobei

die Verbrauchsleistung eine Leistung $P_{auxiliary}$ eines Hilfssystems und eine Leistung $P_{air\ conditioner}$ einer Gleichstrom-Klimaanlage aufweist, wobei das Berechnen einer maximalen Stromgrenze, die von einem einzelnen Traktionswechselrichter an eine Sammelschiene zurückgeführt wird, basierend auf der Verbrauchsleistung, der Leistungsabgabe, der maximalen Ladeleistung, der Anzahl von Traktionswechselrichtern und der Bremsspannung umfasst:

Berechnen der maximalen Leistung $P_{feedback}$, die von einer Gleichstromsammelschiene zurückgeführt wird, aus einer Gleichung $P_{feedback}=P_{power\ storage\ charging}+P_{auxiliary}+P_{air\ conditioner}-P_{dc}$, wobei $P_{dc}$ die Leistungsabgabe des unidirektionalen Energiezufuhrsystems repräsentiert und $P_{power\ storage\ charging}$ die maximale Ladeleistung des Energiespeichersystems repräsentiert; und Berechnen der maximalen Stromgrenze $I_{feedback}$, die von dem einzelnen Traktionswechselrichter an die Sammelschiene zurückgemeldet wird, aus einer Gleichung: $I_{feedback}=P_{feedback}(N \times U_{VH2})$, wobei $N$ die Anzahl der Traktionswechselrichter und $U_{VH2}$ die Bremsspannung des Traktionswechselrichtersystems repräsentiert.

**3.** Verfahren nach Anspruch 2, wobei das Steuern eines Bremswiderstandssystems, das auf Grundlage des Bremsstroms und der maximalen Stromgrenze, die von dem einzelnen Traktionswechselrichter an die Sammelschiene zurückgemeldet wird, ein- oder auszuschalten ist, umfasst:

Steuern eines Schaltkreises, in dem das Bremswiderstandssystem so angeordnet ist, dass es eingeschaltet wird, wenn ein Bremsstrom $I_{LH1}$ größer ist als ein Ergebnis von $k_1 \times I_{feedback}$; und Steuern des Schaltkreises, in dem das Bremswiderstandssystem so angeordnet ist, dass es ausgeschaltet wird, wenn der Bremsstrom $I_{LH1}$ kleiner ist als ein Ergebnis von $k_2 \times_{feedback}$, wobei $k_1$ und $k_2$ jeweils einen Steuerparameter darstellen.

**4.** Verfahren nach Anspruch 3, ferner umfassend: nach der Steuern eines Schaltkreises, in dem das Bremswiderstandssystem so angeordnet ist, dass es eingeschaltet wird,

Aufzeichnen einer kumulativen Zeitspanne, während der der Schaltkreis, in dem das Bremswiderstandssystem angeordnet ist, geschlossen ist; Bestimmen, ob die kumulative Zeitspanne einen vorgegebenen Zeitschwellenwert überschreitet; und Anhalten der elektrischen Bremsung, wenn bestimmt wird, dass die kumulative Zeitspanne den vorgegebenen Zeitschwellenwert überschreitet.

**5.** Verfahren nach Anspruch 4, ferner umfassend: nach dem Anhalten der elektrischen Bremsung Anzeigen von Eingabeaufforderungsinformationen, die angeben, dass die elektrische Bremsung nicht verfügbar ist.

6. Vorrichtung zum Verteilen der elektrischen Bremsleistung einer Hybrid-Elektrostraßenbahn, aufweisend:

eine Sammeleinheit (41), die derart konfiguriert ist, dass sie eine Bremsspannung und einen Bremsstrom eines Traktionswechselrichtersystems erfasst, wenn ein Triebmotor bremst; eine Erfassungseinheit (42), die derart konfiguriert ist, dass sie die Verbrauchsleistung eines Verbrauchsleistungssystems, die Leistungsabgabe eines unidirektionalen Energiezufuhrsystems und die maximale Ladeleistung eines Energiespeichersystems erfasst; eine Berechnungseinheit (43), die derart konfiguriert ist, dass sie auf Grundlage der Verbrauchsleistung, der Leistungsabgabe, der maximalen Ladeleistung, der Anzahl der Traktionswechselrichter und der Bremsspannung eine maximale Stromgrenze berechnet, die von einem einzelnen Traktionswechselrichter an eine Sammelschiene zurückgemeldet wird; und eine Steuerungseinheit (44), die derart konfiguriert ist, dass sie ein Bremswiderstandssystem basierend auf dem Bremsstrom und der maximalen Stromgrenze ein- oder ausschaltet.

7. Vorrichtung nach Anspruch 6, wobei die Verbrauchsleistung eine Leistung $P_{auxiliary}$ eines Hilfssystems und eine Leistung $P_{air\ conditioner}$ einer Gleichstrom-Klimaanlage aufweist, wobei die Berechnungseinheit aufweist:

eine Leistungsberechnungs-Untereinheit, die derart konfiguriert ist, dass sie die maximale Leistung $P_{feedback}$ berechnet, die von einer Gleichstromsammelschiene zurückgemeldet wird, aus einer Gleichung $P_{feedback} = P_{power\ storage\ charging} + P_{auxiliary\ power} + P_{air\ conditioner} - P_{dc}$, wobei $P_{dc}$ die Leistungsabgabe des unidirektionalen Energiezufuhrsystems repräsentiert und $P_{power\ storage\ charging}$ die maximale Ladeleistung des Energiespeichersystems repräsentiert; und eine Stromberechnungs-Untereinheit, die derart konfiguriert ist, dass sie die maximale Stromgrenze $I_{feedback}$ berechnet, die von dem einzelnen Traktionswechselrichter von einer Gleichung an die Sammelschiene zurückgemeldet wird: $I_{feedback}=P_{feedback}(N \times U_{VH2})$, wobei $N$ die Anzahl der Traktionswechselrichter repräsentiert und $U_{VH2}$ die Bremsspannung des Traktionswechselrichtersystems repräsentiert.

8. Vorrichtung nach Anspruch 6, wobei die Steuerungseinheit

eine Einschalt-Untereinheit, die derart konfiguriert ist, dass sie einen Schaltkreis steuert, in dem das Bremswiderstandssystem so angeordnet ist, dass es eingeschaltet wird, wenn der Bremsstrom $I_{LH1}$ größer ist als ein Ergebnis von $k_1 \times I_{feedback}$; und eine Abschalt-Untereinheit, die derart konfiguriert ist, dass sie den Schaltkreis steuert, in dem das Bremswiderstandssystem so angeordnet ist, dass es abgeschaltet wird, wenn der Bremsstrom $I_{LH1}$ kleiner ist als ein Ergebnis von $k_2 \times I_{feedback}$, wobei $k_1$ und $k_2$ jeweils einen Steuerparameter darstellen, aufweist.

9. Computerlesbares Speichermedium, wobei das computerlesbare Speichermedium ein Computerprogramm speichert, das, wenn es von einem Prozessor ausgeführt wird, das Verfahren zum Verteilen der elektrischen Bremsleistung einer Hybrid-Elektrostraßenbahn nach einem der Ansprüche 1 bis 5 durchführt.

**Revendications**

1. **Procédé** de distribution de puissance de freinage électrique d'un tramway électrique hybride, comprenant :

l'acquisition (S201) d'une tension de freinage et d'un courant de freinage d'un système d'onduleur de traction lorsqu'un moteur de traction freine ; l'acquisition (S202) d'une puissance de consommation d'un système de consommation de puissance, d'une puissance de sortie d'un système d'alimentation unidirectionnel et d'une puissance de charge maximale d'un système de stockage de puissance ; le calcul (S203), sur la base de la puissance de consommation, de la puissance de sortie, de la puissance de charge maximale, du nombre d'onduleurs de traction et de la tension de freinage, d'une limite de courant maximale renvoyée à un bus par un seul onduleur de traction ; et la commande (S204) d'un système de résistance de freinage devant être allumé ou éteint sur la base du courant de freinage et de la limite de courant maximale.

2. Procédé selon la revendication 1, dans lequel

la puissance de consommation comprend une puissance $P_{auxiliary}$ d'un système auxiliaire et une puissance $P_{air\ conditioner}$ d'un système de conditionnement d'air à courant continu,

dans lequel le calcul, sur la base de la puissance de consommation, de la puissance de sortie, de la puissance de charge maximale, du nombre d'onduleurs de traction et de la tension de freinage, d'une limite de courant maximale renvoyée à un bus par un seul onduleur de traction comprend :

le calcul d'une puissance maximale $P_{feedback}$ renvoyée à un bus à courant continu à partir d'une équation $P_{feedback} = P_{power\ storage\ charging} + P_{auxiliary} + P_{air\ conditioner} - P_{dc}$, dans laquelle $P_{dc}$ représente la puissance de sortie du système d'alimentation unidirectionnel, et $P_{power\ storage\ charging}$ représente la puissance de charge maximale du système de stockage de puissance ; et
le calcul de la limite de courant maximale $I_{feedback}$ renvoyée au bus par le seul onduleur de traction à partir d'une équation $: I_{feedback} = P_{feedback} (N\ x\ U_{VH2})$, dans lequel $N$ représente le nombre d'onduleurs de traction et $U_{VH2}$ représente la tension de freinage du système d'onduleur de traction.

3. Procédé selon la revendication 2, dans lequel la commande d'un système de résistance de freinage devant être allumé ou éteint sur la base du courant de freinage et de la limite de courant maximale renvoyée au bus par le seul onduleur de traction comprend :

la commande d'un circuit où le système de résistance de freinage est agencé pour être allumé lorsqu'un courant de freinage $I_{LH1}$ est supérieur à un résultat de $k_1\ x\ I_{feedback}$ ; et
la commande du circuit où le système de résistance de freinage est agencé pour être éteint lorsque le courant de freinage $I_{LH1}$ est inférieur à un résultat de $k_2\ x\ I_{feedback}$, dans lequel $k_1$ et $k_2$ représentent chacun un paramètre de commande.

4. Procédé selon la revendication 3, comprenant en outre : après la commande d'un circuit où le système de résistance de freinage est agencé pour être allumé,

l'enregistrement d'une période de temps cumulatif pendant laquelle le circuit où le système de résistance de freinage est agencé est fermé ;
la détermination si oui ou non la période de temps cumulatif dépasse un seuil de temps prédéterminé ; et
l'arrêt d'un freinage électrique lorsqu'il est déterminé que la période de temps cumulatif dépasse le seuil de temps prédéterminé.

5. Procédé selon la revendication 4, comprenant en outre : après le freinage électrique d'arrêt,
l'affichage d'informations d'invitation indiquant que le freinage électrique est indisponible.

6. Dispositif de distribution de puissance de freinage électrique d'un tramway électrique hybride, comprenant :

une unité de collecte (41) configurée pour acquérir une tension de freinage et un courant de freinage d'un système d'onduleur de traction lorsqu'un moteur de traction freine ;
une unité d'acquisition (42) configurée pour acquérir une puissance de consommation d'un système de consommation de puissance, une puissance de sortie d'un système d'alimentation unidirectionnel et une puissance de charge maximale d'un système de stockage de puissance ;
**une unité** de calcul (43) configurée pour calculer, sur la base de la puissance de consommation, de la puissance de sortie, de la puissance de charge maximale, du nombre d'onduleurs de traction et de la tension de freinage, d'une limite de courant maximale renvoyée à un bus par un seul onduleur de traction ; et
une unité de commande (44) configurée pour commander un système de résistance de freinage devant être allumé ou éteint sur la base du courant de freinage et de la limite de courant maximale.

7. Dispositif selon la revendication 6, dans lequel

la puissance de consommation comprend une puissance $P_{auxiliary}$ d'un système auxiliaire et une puissance $P_{air\ conditioner}$ d'un système de conditionnement d'air à courant continu, dans lequel
l'unité de calcul comprend :

une sous-unité de calcul de puissance configurée pour calculer une puissance maximale $P_{feedback}$ renvoyée à un bus à courant continu à partir d'une équation $P_{feedback} = P_{power\ storage\ charging} + P_{auxiliary} + P_{air\ conditioner} - P_{dc}$, dans lequel $P_{dc}$ représente la puissance de sortie du système d'alimentation unidirectionnel, et $P_{power\ storage\ charging}$ représente la puissance de charge maximale du système de stockage de puissance ; et
une sous-unité de calcul de courant configurée pour calculer la limite de courant maximale $I_{feedback}$ renvoyée au bus par le seul onduleur de traction à partir d'une équation : $I_{feedback} = P_{feedback} (N \times U_{VH2})$, dans lequel $N$ représente le nombre d'onduleurs de traction et $U_{VH2}$ représente la tension de freinage du système d'onduleur de traction.

**8.** Dispositif selon la revendication 6, dans lequel l'unité de commande comprend

une sous-unité d'allumage configurée pour commander un circuit où le système de résistance de freinage est agencé pour être allumé lorsqu'un courant de freinage $I_{LH1}$ est supérieur à un résultat de $k_1 \times I_{feedback}$, et une sous-unité d'extinction configurée pour commander le circuit où le système de résistance de freinage est agencé pour être éteint lorsque le courant de freinage $I_{LH1}$ est inférieur à un résultat de $k_2 \times I_{feedback}$, dans lequel $k_1$ et $k_2$ représentent chacun un paramètre de commande.

**9.** Support de stockage lisible par ordinateur, dans lequel le support de stockage lisible par ordinateur stocke un programme informatique qui, lorsqu'il est exécuté par un processeur, réalise le procédé de distribution de freinage électrique d'un tramway électrique hybride selon l'une quelconque des revendications 1 à 5.

**Figure 1**

Acquire a braking voltage and a braking current of a traction inverter system when a traction motor brakes ～S201

Acquire consumption power of a power consumption system, output power of a unidirectional power supply system and maximum charging power of a power storage system ～S202

Calculate, based on the power consumption power, the output power, the maximum charging power, the number of traction inverters and the braking voltage, a maximum current limit fed back to a bus by a single traction inverter ～S203

Control a braking resistor system to be switched on or off based on the braking current and the maximum current limit ～S204

**Figure 2**

Feedback $I_{\text{feedback}} - \text{P}/(\text{N*U}_{H2})$

Direct current
side current $I_{H1}$

+ −

PID
adjustment

Power storage
system

$P_{\text{power storage charging}}$

+

Hydrogen fuel/
internal
combustion
engine system

$P_{\text{dc}}$

−

+

Auxiliary
system

$P_{\text{auxiliary}}$

+

Direct current
air conditioning
system

$P_{\text{air conditioner}}$

−

Braking resistor

$P_{\text{resistor}}$

**Figure 3**

Collection unit    41

Acquisition unit    42

Calculation unit    43

Control unit    44

**Figure 4**

50

Device for distributing
electric braking power of a
hybrid electric tram

51　　　　　　52

Memory —— Processor

**Figure 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 201910604442X
- DE 102006056374 A1